# EUROPÄISCHE PATENTSCHRIFT

(11) **EP 2 830 305 B1**
(45) Veröffentlichungstag und Bekanntmachung des Hinweises auf die Patenterteilung: **23.11.2016**
(21) Anmeldenummer: 13177859.9
(22) Anmeldetag: 24.07.2013
(51) Int. Cl.: H04N 5/232, G06T 7/20

(54) **Anzeigevorrichtung für ein Kraftfahrzeug und Verfahren zum Betreiben einer derartigen Anzeigevorrichtung**
Display device for a motor vehicle and method for operating such a display device
Dispositif d'affichage pour un véhicule automobile et procédé de fonctionnement d'un tel dispositif d'affichage

(43) Veröffentlichungstag der Anmeldung: 28.01.2015
(73) Patentinhaber: SMR Patents S.à.r.l., 1653 Luxembourg (LU)
(72) Erfinder: Liesner, Alf, 73630 Remshalden (DE)
(74) Vertreter: Weber-Bruls, Dorothée

(56) Entgegenhaltungen:
- EP-A2- 1 085 463
- WO-A1-2007/049266
- WO-A1-2012/143036
- JP-A- 2005 039 599
- US-A1- 2011 001 614
- US-A1- 2012 249 792

## Beschreibung

Die Erfindung betrifft eine Anzeigevorrichtung für ein Kraftfahrzeug sowie ein Verfahren zum Betreiben einer derartigen Anzeigevorrichtung, mit mindestens einem Erfassungsmittel, mit mindestens einer ein Speichermittel umfassenden Datenverarbeitungseinheit und mit mindestens einem Ausgabemittel.

Anzeigevorrichtungen für Kraftfahrzeuge sowie Verfahren zum Betreiben derartiger Anzeigevorrichtungen sind bekannt. Eine derartige Anzeigevorrichtung kann beispielsweise eine Rückfahrkamera eines Kraftfahrzeugs umfassen. Bei dieser nimmt ein als Kamera ausgebildetes Erfassungsmittel Bilddaten auf, die über ein als Monitor oder Display ausgebildetes Ausgabemittel für einen Fahrzeugfahrer darstellbar ist. Hierbei hat es sich als nachteilig herausgestellt, dass der durch das Erfassungsmittel erfasste Bilddatensatz in der Darstellung variieren kann. Dieses ist nicht zuletzt durch erschütterungsbedingte Bewegungen oder Lageveränderungen des Erfassungsmittels begründet.

Darüber hinaus sind Kraftfahrzeuge mit mehreren Erfassungsmitteln bekannt, wobei das Ausgabemittel die Bilddaten mindestens zweier Erfassungsmittel darstellt. Solchenfalls ist das zuvor skizzierte Problem insbesondere dadurch verstärkt, dass die störungsbedingte Bewegung der mindestens zwei Erfassungsmittel unabhängig voneinander erfolgt und hierdurch eine Darstellung eines gemeinsamen Bildes in dem Ausgabemittel erschwert ist.

Eine Anzeigevorrichtung für ein Kraftfahrzeug sowie ein Verfahren zum Betreiben einer derartigen Anzeigevorrichtung ist bekannt aus WO 2007/049266 A1, bei der die Position des Erfassungsmittels und/oder eines Trägers des Erfassungsmittels durch eine Motorposition erfasst wird und eine Kalibrierung des Systems anhand von Bezugspunkten durchgeführt wird.

Aufgabe der Erfindung ist, ein Verfahren zum Betreiben einer Anzeigevorrichtung für ein Kraftfahrzeug sowie eine Anzeigevorrichtung, die dazu geeignet ist ein derartiges Verfahren zu betreiben, vorzuschlagen, bei der eine Darstellung eines erfassten Bilddatensatzes im Ausgabemittel verbessert ist.

Diese Aufgabe wird durch ein erfindungsgemäßes Verfahren zum Betreiben einer Anzeigevorrichtung für ein Kraftfahrzeug, die mindestens ein Erfassungsmittel, mindestens eine, insbesondere mindestens ein Speichermittel umfassenden, Datenverarbeitungseinheit und mindestens ein Ausgabemittel aufweist, mit den Schritten gelöst:
a. Erfassen mindestens eines Bilddatensatzes durch die das mindestens eine Erfassungsmittel;
b. Erfassen der Position des Erfassungsmittels und/oder eines Trägers des Erfassungsmittels;
c. Suchen und/oder Erfassen von mindestens einem spezifischen Bildmerkmal des Bilddatensatzes durch die Datenverarbeitungseinheit sowie dessen Ist-Anordnung innerhalb des Bilddatensatzes;
d. Erfassen einer Abweichung der Ist-Anordnung innerhalb des Bilddatensatzes des mindestens einen spezifischen Bildmerkmals des Bilddatensatzes zu einer im Speichermittel hinterlegten Soll-Anordnung innerhalb des Bilddatensatzes des mindestens einen spezifischen Bildmerkmals des Bilddatensatzes durch die Datenverarbeitungseinheit;
e. gegebenenfalls Korrigieren der Abweichung;
f. Ausgeben des korrigierten Bilddatensatzes durch das Ausgabemittel, wobei das Erfassen mindestens eines Bilddatensatzes durch das mindestens eine Erfassungsmittel ein Erfassen eines ersten Bilddatensatzes von einem ersten Erfassungsmittel und das Erfassen eines zweiten Bilddatensatzes von einem zweiten Erfassungsmittel umfasst, dass am Ausgabemittel ein aus dem ersten Bilddatensatz und dem zweiten Bilddatensatz auf Grundlage einer Umrechenmatrix berechneter gemeinsamer Bilddatensatz ausgegeben wird, und dass in Abhängigkeit des Fahrzustands vor einem Ausgeben des gemeinsamen Bilddatensatzes durch das Ausgabemittel eine Neuberechnung der Umrechenmatrix durch die Datenverarbeitungseinheit erfolgt, wobei der Fahrzustand eine Bewegungsrichtung und eine Bewegungsgeschwindigkeit ist, die Neuberechnung erfolgt mit den Schritten:
g. Erfassen mindestens eines spezifischen Bildmerkmals (18), das sowohl im ersten Bilddatensatz als auch im zweiten Bilddatensatz enthalten ist;
h. Indeckungbringung der mindestens einen spezifischen Bildmerkmale (18);
i. Ermitteln der, insbesondere Rotation und Translation abbildenden, Umrechenmatrix;
j. gegebenenfalls Korrektur des gemeinsamen Bilddatensatzes.

Grundsätzlich ist es denkbar, dass das erfindungsgemäße Verfahren bei einer Anzeigevorrichtung mit lediglich einem Erfassungsmittel angewendet wird. Wenn die Anzeigevorrichtung jedoch mehrere Erfassungsmittel umfasst, erweist es sich als vorteilhaft, wenn das Erfassen mindestens eines Bilddatensatzes durch das mindestens eine Erfassungsmittel ein Erfassen eines ersten Bilddatensatzes von einem ersten Erfassungsmittel und das Erfassen eines zweiten Bilddatensatzes von einem zweiten Erfassungsmittel umfasst und/oder dass am Ausgabemittel ein aus dem ersten Bilddatensatz und dem zweiten Bilddatensatz auf Grundlage einer Umrechenmatrix berechneter gemeinsamer Bilddatensatz ausgegeben wird.

Durch das Verwenden einer Umrechenmatrix ist das Berechnen eines gemeinsamen Bilddatensatzes, das durch das Ausgabemittel ausgegeben wird, vereinfacht.

Dadurch, dass die mindestens einen spezifische Bildmerkmale in Deckung miteinander gebracht werden, können der erste Bilddatensatz und der zweite Bilddatensatz nahtlos den gemeinsamen Bilddatensatz bilden. Wenn der erste Bilddatensatz bezüglich des zweiten Bilddatensatz verdreht oder verschoben ist kann durch die Umrechenmatrix der gemeinsame Bilddatensatz korrigiert werden. Hierdurch ist es ermöglicht, dem Fahrzeugfahrer über das Ausgabemittel eine unverdrehte und fließend ineinander übergehende Ausgabe bereitzustellen. Die Bewegungsrichtung und die Bewegungsgeschwindigkeit kann durch eine Sensoreinheit, die der Anzeigevorrichtung funktional zugeordnet ist erfasst werden.

Das Erfassen eines Bilddatensatzes durch das mindestens eine Erfassungsmittel kann in periodischen Abständen von 0,1 Millisekunden bis 1 Sekunden erfolgen. Hierbei kann die Erfassungsfrequenz der Frequenz entsprechen, mit welcher der mindestens eine Bilddatensatz im Ausgabemittel ausgegeben wird. Hierdurch ist eine Darstellung der durch das Erfassungsmittel erfassten Bilddaten in Echtzeit gewährleistet.

Das Erfassungsmittel kann an einem Träger, insbesondere einer mechanischen Komponente, des Kraftfahrzeugs angeordnet sein, beispielsweise einem Außenspiegel oder einer Heckklappe. Solchenfalls wird über das Erfassen der Position des Erfassungsmittels und/oder des Trägers erfasst, ob sich der Träger in einer bestimmten Stellung befindet. Wenn der Träger beispielsweise einen Außenspiegel umfasst, kann erfasst werden, ob er sich in einer abgeklappten oder ausgeklappten Endstellung befindet. Wenn der Träger eine Heckklappe umfasst, kann erfasst werden, ob die Heckklappe geöffnet ist oder nicht. Die jeweilige Stellung des Trägers kann solchenfalls einfach bei dem Erfassen des Bilddatensatzes auf einfach Weise Berücksichtigung finden, wodurch die Korrektur des erfassten Bilddatensatzes vereinfacht ist.

Bei einer Ausführungsform des Verfahrens ist vorgesehen, dass ein Warnsignal an ein Kraftfahrzeuganzeigesystem gesendet wird, wenn die Ist-Endstellung des Träger, beispielsweise ein ausgeklappter Zustand eines Außenspiegels, von einer Soll-Endstellung abweicht.

Das Suchen und/oder Erfassen des mindestens einen spezifischen Bildmerkmals kann beispielsweise über eine Auswertung der Helligkeit und/oder der Kontraständerung innerhalb der Bilddaten erfolgen.

Der Bilddatensatz kann eine Hinterlegung der Daten in Zeilen und Reihen umfassen.

Unter der Ist-Anordnung innerhalb des Bilddatensatzes kann beispielsweise die Anordnung in der Zeilen- und Reihenhinterlegung der einzelnen Daten des Bilddatensatzes verstanden werden.

Darüber hinaus kann die Soll-Anordnung der spezifischen Merkmale ebenfalls in einer zeilen- und reihenbasierten Datenanordnung erfolgen. Dadurch, dass zum Einen mindestens ein spezifisches Bildmerkmal innerhalb einer Soll-Anordnung in der Datenverarbeitungseinheit hinterlegt sind und dieses spezifische Bildmerkmal durch das Erfassungsmittel erfassbar ist, kann eine Abweichung der Ist-Anordnung von der Soll-Anordnung korrigiert werden. Hierdurch ist es ermöglicht, dass der ausgegebene korrigierte Bilddatensatz durch das Ausgabemittel dem Fahrzeugfahrer in einer gewohnten Form dargestellt wird. Hierdurch ist die Gefahr einer Fehlinterpretation der durch das Ausgabemittel bereitgestellten Ausgabe durch den Fahrer des Kraftfahrzeugs reduziert.

Unter einem spezifischen Bildmerkmal können sämtliche Helligkeits- und/oder Kontraständerungen innerhalb des Bilddatensatzes verstanden werden. Es erweist sich hierbei als vorteilhaft, wenn mindestens eines des mindestens einen spezifischen Bildmerkmals eine Fahrzeuggeometrie, wie Tankdeckel, Türgriff und/oder Stoßfänger, eine Fahrbahngeometrie, wie Spurstreifen und/oder Fahrbahnmarkierung, und/oder eine Umweltgeometrie, wie Horizontverlauf und/oder Häuserkanten, umfasst.

In Weiterbildung letztgenannten Erfindungsgedankens erweist es sich als vorteilhaft, wenn mindestens eines der mindestens zwei spezifischen Bildmerkmale einen Kalibrierpunkt für die Anzeigevorrichtung bildet.

Grundsätzlich ist es denkbar, dass in dem Bilddatensatz lediglich ein spezifisches Bildmerkmal gesucht bzw. erfasst wird. Dieses ist ausreichend, wenn das Erfassungsmittel beispielsweise an einer Heckklappe anordenbar ist. Um den mindestens einen Bilddatensatz jedoch zweidimensional korrigieren zu können, wird es bevorzugt, wenn mindestens zwei spezifische Bildmerkmale des mindestens einen Bilddatensatzes erfasst werden. Um den Bilddatensatz dreidimensional bearbeiten zu können, erweist es sich als vorteilhaft, wenn das Suchen und/oder das Erfassen von mindestens zwei spezifischen Bildmerkmalen des Bilddatensatzes durch die Datenverarbeitungseinheit mindestens drei spezifische Merkmale umfasst.

Das Korrigieren des mindestens einen Bilddatensatzes kann grundsätzlich auf eine beliebige Art und Weise erfolgen. Beispielsweise ist es denkbar, dass das Korrigieren der Abweichung ein Verstellen des mindestens einen Erfassungsmittels umfasst.

Das Verstellen kann elektrisch, magnetisch, hydraulisch und/oder mechanisch erfolgen.

In Weiterbildung letztgenannten Erfindungsgedankens erweist es sich als vorteilhaft, wenn das Verstellen eine mechanisches Verstellen, insbesondere ein Drehen, ein Verschwenken oder ein Verstellen des optischen Brennpunkts, durch mindestens eine Verstelleinheit umfasst.

Hierdurch ist das mindestens eine Erfassungsmittel in eine vorgebbare oder vorgegebene Ausgangslage bewegbar bzw. verdrehbar. Darüber hinaus ist es denkbar, dass alternativ oder zusätzlich zu letztgenannten Erfindungsgedanken das Korrigieren eine, insbesondere algorithmusgestützte, Berechnung des Bilddatensatzes des mindestens einen Erfassungsmittels, insbesondere eine Rotation und/oder Translation, durch die Datenverarbeitungseinheit umfasst.

Hierdurch erfolgt das Korrigieren gestützt durch die Datenverarbeitungseinheit.

Grundsätzlich ist es denkbar, dass die Umrechenmatrix sowie die Korrektur des gemeinsamen Bilddatensatzes stets durchgeführt wird. Allerdings erweist es sich als zweckmäßig, wenn die regelmäßigen Zeitabstände 0,1 Millisekunden bis 1 Sekunden umfassen.

Grundsätzlich ist es denkbar, dass der durch das Ausgabemittel ausgegebene gemeinsame Bilddatensatz sowohl sämtliche Informationen des ersten Bilddatensatzes und/oder sämtliche Informationen des zweiten Bilddatensatzes enthält. Allerdings erweist es sich als vorteilhaft, eine Reduktion des gemeinsamen Bilddatensatzes auf einen vorgegeben oder vorgebbaren Bildausschnitt, insbesondere in Abhängigkeit des Fahrzustands des Kraftfahrzeugs, erfolgt.

Hierdurch kann dem Fahrzeugfahrer durch das Ausgabemittel die aktuell wesentliche Information dargestellt werden. Hierbei ist es beispielsweise denkbar, dass, in Abhängigkeit des Fahrzustandes, bei einer Autobahnfahrt der rückwärtige Bereich der in dem Ausgabemittel normal dargestellt wird. Dahingegen ist es denkbar, dass beim beispielsweise Rückwärtseinparken, der rückwärtige relevante Bereich in dem Ausgabemittel vergrößert dargestellt wird.

Die Aufgabe wird darüber hinaus durch eine Anzeigevorrichtung für ein Kraftfahrzeug gelöst, mit mindestens einem Erfassungsmittel, mindestens einer mindestens ein Speichermittel umfassenden Datenverarbeitungseinheit und mit mindestens einem Ausgabemittel, dass mit einem Verfahren mit einem der zuvor genannten Merkmale betreibbar ist.

Das mindestens eine Erfassungsmittel kann beispielsweise eine Kamera umfassen. Das mindestens eine Speichermittel umfassende Datenverarbeitungseinheit kann separat gebildet sein oder in einem ohnehin im Fahrzeug vorhandenen Fahrzeugbus integriert sein. Das Ausgabemittel kann beispielsweise eine zusätzliche Anzeige, wie LED- und/oder LCD-Bildschirm, umfassen oder an einer ohnehin schon vorhandenen Anzeige, wie Navigationsbildschirm, ausgebildet sein.

Darüber hinaus erweist es sich als vorteilhaft, wenn das mindestens eine Erfassungsmittel mindestens ein erstes Erfassungsmittel und mindestens ein zweites Erfassungsmittel aufweist.

Um das erste Erfassungsmittel und/oder das zweite Erfassungsmittel drehen, verschwenken oder bewegen zu können, ist bei einer Ausführungsform der erfindungsgemäßen Anzeigevorrichtung vorgesehen, dass mindestens eine Verstelleinheit vorgesehen ist, die mindestens einer Erfassungseinheit zuordenbar oder zugeordnet ist.

Schließlich erweist es sich als vorteilhaft, wenn mindestens ein Sensormittel, wie Bewegungssensor, Geschwindigkeitssensor und/oder Abstandssensor vorgesehen ist.

Das erfindungsgemäße Verfahren sowie die erfindungsgemäße Anzeigevorrichtung erweisen sich in mehrfacher Hinsicht als vorteilhaft:

Dadurch, dass in dem Speichermittel eine Soll-Anordnung der mindestens zwei spezifischen Merkmale des mindestens einen Bilddatensatzes hinterlegt sind, kann der mindestens eine durch das mindestens eine Erfassungsmittel erfasste Bilddatensatz derart angepasst werden, dass dem Fahrzeugfahrer ein Bild in gewohnter Darstellung darstellbar ist.

Wenn mindestens zwei Erfassungsmittel vorgesehen sind, ist es ermöglicht, durch Verwenden und Neuberechnen einer Umrechenmatrix die beiden Bilddatensätze derart miteinander zu fügen, dass sich dem Fahrzeugfahrer ein nahtloses, unverdrehtes Bild in gewohnter Darstellung darstellt.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des erfindungsgemäßen Verfahrens beziehungsweise der erfindungsgemäßen Anzeigevorrichtung.

In der Zeichnung zeigt:
- Figur 1: ein schematisches Ablaufdiagramm des erfindungsgemäßen Verfahrens;
- Figur 2: eine schematische Draufsicht auf ein erstes Ausführungsbeispiel der erfindungsgemäßen Anzeigevorrichtung;
- Figur 3: eine schematische Draufsicht auf ein zweites Ausführungsbeispiel der erfindungsgemäßen Anzeigevorrichtung.

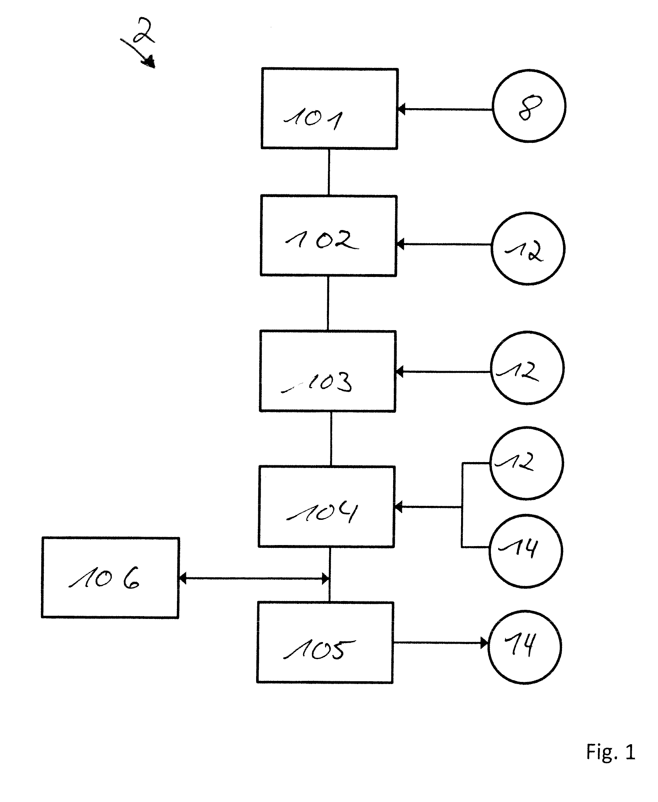

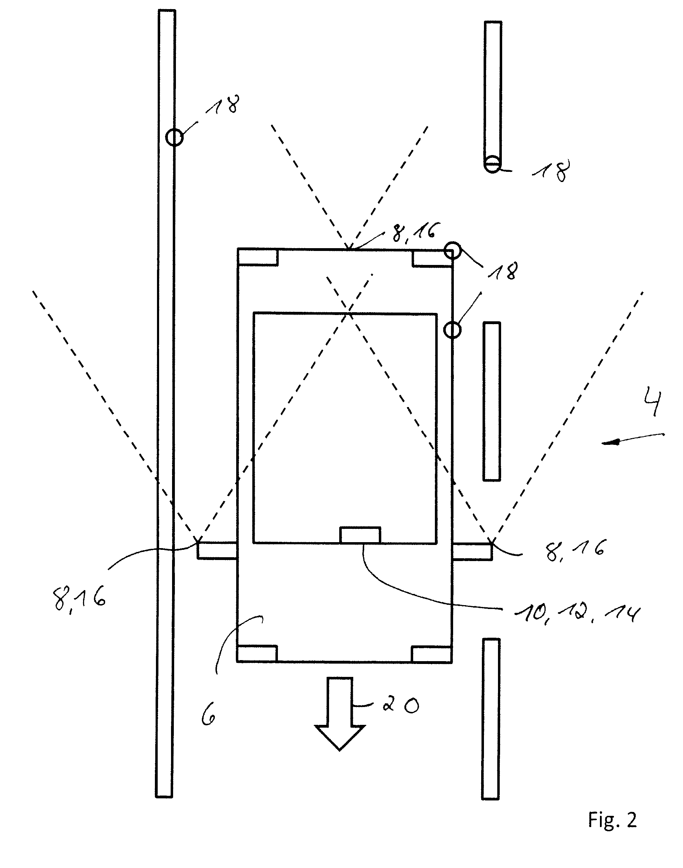

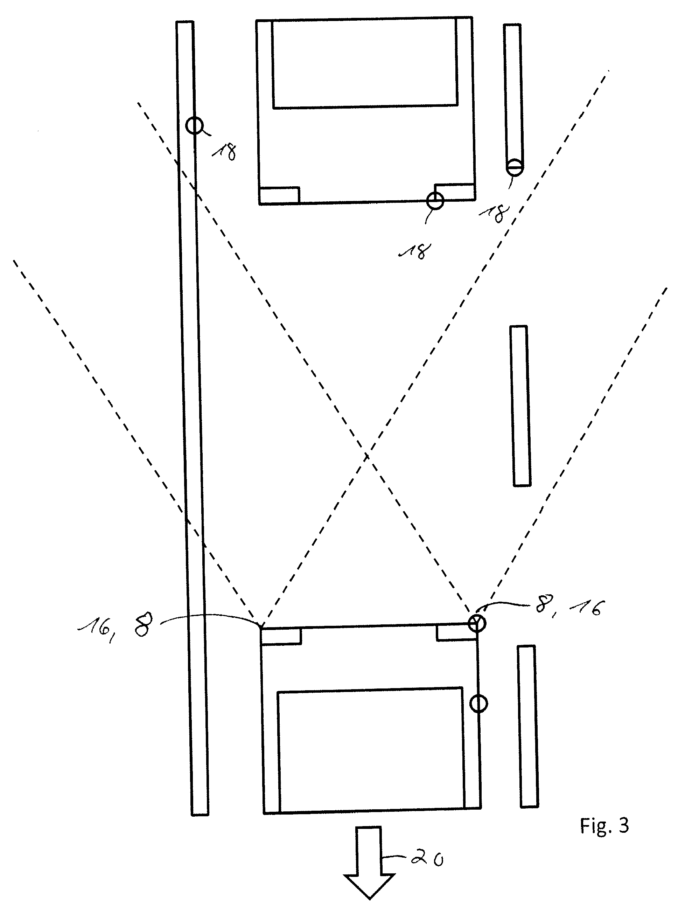

Figur 1 zeigt ein insgesamt mit dem Bezugszeichen 2 versehenes Verfahren zum Betreiben einer in den Figuren 2 und 3 dargestellten Anzeigevorrichtung 4 für ein Kraftfahrzeug 6. Die Anzeigevorrichtung 4 umfasst bei den in den Figuren gezeigten Ausführungsbeispielen Erfassungsmittel 8, jeweils mindestens eine ein Speichermittel 10 umfassende Datenverarbeitungseinheit 12 sowie ein Ausgabemittel 14. Bei dem in den Figuren gezeigten Ausführungsbeispielen ist die das Speichermittel 10 umfassende Datenverarbeitungseinheit 12 in das Ausgabemittels 14 integriert.

In einem ersten Schritt 101 des erfindungsgemäßen Verfahrens 2 zum Betreiben der Anzeigevorrichtung 4 des Kraftfahrzeugs 6 wird mittels des Erfassungsmittels 8 ein Bilddatensatz erfasst. In einem weiteren Schritt 102 wird mittels der Datenverarbeitungseinheit 12 in dem Bilddatensatz mindestens ein spezifisches Bildmerkmal 18 des Bilddatensatzes gesucht und ermittelt. Darüber hinaus wird gleichzeitig die Ist-Anordnung der mindestens zwei spezifischen Bildmerkmale 18 innerhalb des im Schritt 101 ermittelten Bilddatensatzes erfasst.

In einem weiteren Schritt 103 wird einer Abweichung der Ist-Anordnung der mindestens zwei spezifische Bildmerkmale 18 innerhalb des Bilddatensatzes zu einer im Speichermittel 12 hinterlegten Soll-Anordnung der mindestens einen spezifischen Bildmerkmale 18 erfasst. Diese Abweichung kann in einem darauf folgenden Schritt 104 durch die Datenverarbeitungseinheit 12 und/oder durch eine Verstelleinheit 14 der Anzeigevorrichtung 4 korrigiert werden. Im Anschluss wird in einem Schritt 105 der korrigierte Bilddatensatz durch das Ausgabemittel 14 ausgegeben und dadurch einem Fahrzeugfahrer sichtbar gemacht.

In den Figuren 2 und 3 sind exemplarisch markante Merkmale eingekreist, die als spezifische Bildmerkmale 18 in dem Bilddatensatz erfassbar sind. Diese können beispielsweise eine Fahrbahngeometrie wie Spurstreifen und/oder Fahrbahnrandmarkierung oder technische Merkmale des Fahrzeugs, wie Tankdeckel oder Stoßfänger umfassen. Um ein dreidimensionales Bearbeiten des Bilddatensatzes zu ermöglichen, sind bei dem Suchen bzw. dem Erfassen der spezifischen Bildmerkmale mindestens drei spezifische Bildmerkmale 18 umfasst.

Zum Korrigieren einer erfassten Abweichung zwischen der Ist-Anordnung und der Soll-Anordnung der spezifischen Bildmerkmale 18 des Bilddatensatzes kann eine rechnerische Bearbeitung des Bilddatensatzes erfolgen oder das Erfassungsmittel 8 mittels der Verstelleinheit 16 gedreht oder bewegt werden.

Darüber hinaus kann vorgesehen sein, dass beim ersten Schritt 101 das Erfassen mindestens einen Bilddatensatzes das Erfassen eines ersten Bilddatensatzes und das Erfassen eines zweiten Bilddatensatzes durch zwei Erfassungsmittel 8 umfasst. Solchenfalls ist es beispielsweise zwischen Schritt 104 und Schritt 105 vorgesehen, dass in einem Schritt 106 eine Neuberechnung einer Umrechenmatrix erfolgt. Hierbei werden mindestens zwei spezifische Bildmerkmale 18 des ersten Bilddatensatzes als auch des zweiten Bilddatensatzes, die in beiden identisch sind, aus dem zweiten Schritt 102 übernommen und miteinander in Deckung gebracht. Hierbei wird die Umrechenmatrix bestimmt, sofern zum in Deckung bringen der mindestens zwei spezifischen Bildmerkmale einer Rotation oder Translation erfolgen muss. Darüber hinaus findet in Schritt 106 gegebenenfalls eine Korrektur der Bilddaten statt.

Figur 2 zeigt ein erstes Ausführungsbeispiel der erfindungsgemäßen Anzeigevorrichtung 4 des Kraftfahrzeugs 6. Bei dem in den Figuren 2 und 3 dargestellten Ausführungsbeispiel wird das Kraftfahrzeug 6 bei einer Fahrt entlang einer Fahrtrichtung 20 gezeigt. Bei dem in Figur 2 ersichtlichen Ausführungsbeispiel sind die Erfassungsmittel 8 in einem Außenspiegel angeordnet. Die spezifischen Bildmerkmale umfassen solchenfalls beispielsweise den Tankdeckel, die Stoßfangeinrichtung im heckwärtigen Bereich des Kraftfahrzeugs 6 sowie eine Spurstreifenmarkierung.

Figur 3 zeigt ein zweites Ausführungsbeispiel, bei dem die Fassungsmittel 8 im heckwärtigen Bereich des Kraftfahrzeugs 6 angeordnet sind.

## Patentansprüche

1. Verfahren (2) zum Betreiben einer Anzeigevorrichtung (4) für ein Kraftfahrzeug (6), die mindestens ein Erfassungsmittel (8), mindestens eine, insbesondere mindestens ein Speichermittel (10) umfassende, Datenverarbeitungseinheit (12) und mindestens ein Ausgabemittel (14) aufweist, mit den Schritten:
a. Erfassen mindestens eines Bilddatensatzes durch das mindestens eine Erfassungsmittel (8);
b. Erfassen der Position des Erfassungsmittels (8) und/oder eines Trägers des Erfassungsmittels (8);
c. Suchen und/oder Erfassen von mindestens einem spezifischen Bildmerkmal (18) des Bilddatensatzes durch die Datenverarbeitungseinheit (12) sowie deren Ist-Anordnung innerhalb des Bilddatensatzes;
d. Erfassen einer Abweichung der Ist-Anordnung innerhalb des Bilddatensatzes des mindestens einen spezifischen Bildmerkmals (18) des Bilddatensatzes zu einer im Speichermittel (10) hinterlegten Soll-Anordnung innerhalb des Bilddatensatzes des mindestens einen spezifischen Bildmerkmals (18) des Bilddatensatzes durch die Datenverarbeitungseinheit (12);
e. gegebenenfalls Korrigieren der Abweichung;
f. Ausgeben des korrigierten Bilddatensatzes durch das Ausgabemittel (14); **dadurch gekennzeichnet, dass** das Erfassen mindestens eines Bilddatensatzes durch das mindestens eine Erfassungsmittel (8) ein Erfassen eines ersten Bilddatensatzes von einem ersten Erfassungsmittel (8) und das Erfassen eines zweiten Bilddatensatzes von einem zweiten Erfassungsmittel (8) umfasst, dass am Ausgabemittel (14) ein aus dem ersten Bilddatensatz und dem zweiten Bilddatensatz auf Grundlage einer Umrechenmatrix berechneter gemeinsamer Bilddatensatz ausgegeben wird
und dass in Abhängigkeit des Fahrzustands vor einem Ausgeben des gemeinsamen Bilddatensatzes durch das Ausgabemittel (14) eine Neuberechnung der Umrechenmatrix durch die Datenverarbeitungseinheit (12) erfolgt, wobei der Fahrzustand eine Bewegungsrichtung und eine Bewegungsgeschwindigkeit ist, die Neuberechnung erfolgt mit den Schritten:
g. Erfassen mindestens eines spezifischen Bildmerkmals (18), das sowohl im ersten Bilddatensatz als auch im zweiten Bilddatensatz enthalten ist;
h. Indeckungbringung der mindestens einen spezifischen Bildmerkmale (18);
i. Ermitteln der, insbesondere Rotation und Translation abbildenden, Umrechenmatrix;
j. gegebenenfalls Korrektur des gemeinsamen Bilddatensatzes.

2. Verfahren (2) nach Anspruch 1, **dadurch gekennzeichnet, dass** mindestens eines des mindestens einen spezifischen Bildmerkmals (18) eine Fahrzeuggeometrie, wie Tankdeckel, Türgriff und/oder Stoßfänger, eine Fahrbahngeometrie, wie Spurstreifen und/oder Fahrbahnmarkierung, und/oder eine Umweltgeometrie, wie Horizontverlauf und/oder Häuserkanten, umfasst.

3. Verfahren (2) nach Anspruch 2, **dadurch gekennzeichnet, dass** mindestens eines des mindestens einen spezifischen Bildmerkmals (18) einen Kalibrierpunkt für die Anzeigevorrichtung (4) bildet.

4. Verfahren (2) nach mindestens einem der vorhergehenden Ansprüche, **dadurch gekennzeichnet, dass** das Suchen und/oder Erfassen von mindestens einem spezifischen Bildmerkmal (18) des mindestens einen Bilddatensatzes durch die Datenverarbeitungseinheit (12) mindestens zwei spezifische Bildmerkmale (18) umfasst.

5. Verfahren (2) nach mindestens einem der vorhergehenden Ansprüche, **dadurch gekennzeichnet, dass** das Suchen und/oder Erfassen von mindestens einem spezifischen Bildmerkmal (18) des mindestens einen Bilddatensatzes durch die Datenverarbeitungseinheit (12) mindestens drei spezifische Bildmerkmale (18) umfasst.

6. Verfahren (2) nach mindestens einem der vorhergehenden Ansprüche, **dadurch gekennzeichnet, dass** das Korrigieren der Abweichung ein Verstellen des mindestens einen Erfassungsmittels (8) umfasst.

7. Verfahren (2) nach Anspruch 6, **dadurch gekennzeichnet, dass** das Verstellen ein mechanisches Verstellen, insbesondere ein Drehen, ein Verschwenken oder ein Verstellen des optischen Brennpunkts, durch mindestens eine Verstelleinheit (16) umfasst.

8. Verfahren (2) nach mindestens einem der vorhergehenden Ansprüche, **dadurch gekennzeichnet, dass** das Korrigieren eine, insbesondere algorithmusgestützte, Berechnung des Bilddatensatzes des mindestens einen Erfassungsmittels (8), insbesondere eine Rotation und/oder Translation, durch die Datenverarbeitungseinheit (12) umfasst.

9. Verfahren (2) nach mindestens einem der vorhergehenden Ansprüche, **dadurch gekennzeichnet, dass** die Neuberechnung der Umrechenmatrix durch die Datenverarbeitungseinheit (12) in regelmäßigen Zeitabstände von 0,1 Millisekunden bis 1 Sekunden erfolgt.

10. Anzeigevorrichtung (4) für ein Kraftfahrzeug (6), mit mindestens einem Erfassungsmittel (8), mindestens einer mindestens ein Speichermittel (10) umfassenden Datenverarbeitungseinheit (12) und mit mindestens einem Ausgabemittel (14), **dadurch gekennzeichnet, dass** es mit einem Verfahren (2) gemäß einem oder mehreren der Ansprüche 1 bis 10 betreibbar ist.

11. Anzeigevorrichtung (4) nach Anspruch 9, **dadurch gekennzeichnet, dass** das mindestens eine Erfassungsmittel (8) mindestens ein erstes Erfassungsmittel (8) und mindestens ein zweites Erfassungsmittel (8) aufweist.

12. Anzeigenvorrichtung nach einem der Ansprüche 10 oder 11, **gekennzeichnet durch** mindestens einer Verstelleinheit (16), die mindestens einer Erfassungseinheit zuordenbar oder zugeordnet ist und/oder **durch** mindestens ein Sensormittel, wie Bewegungssensor, Geschwindigkeitssensor und/oder Abstandssensor.

## Claims

1. A method (2) for operating a display device (4) for a motor vehicle (6), said display device having at least one acquisition means (8), at least one data processing unit (12), in particular comprising at least one storage means (10), and at least one output means (14), having the steps:
a. acquisition of at least one image data set by the at least one acquisition means (8);
b. acquisition of the position of the acquisition means (8) and/or of a support of the acquisition means (8);
c. searching for and/or acquisition of at least one specific image characteristic (18) of the image data set by the data processing unit (12) as well as their actual arrangement within the image data set;
d. acquisition of a deviation of the actual arrangement of the at least one specific image characteristic (18) of the image data set within the image data set from a target arrangement stored in the storage means (10) of the at least one specific image characteristic (18) of the image data set within the image data set by the data processing unit (12);
e. if necessary, correction of the deviation;
f. outputting of the corrected image data set by the output means (14), **characterized in that** the acquisition of at least one image data set by the at least one acquisition means (8) comprises an acquisition of a first image data set by a first acquisition means (8) and the acquisition of a second image data set by a second acquisition means (8), **in that** a common image data set calculated from the first image data set and the second image data set on the basis of a conversion matrix is output at the output means (14),
and **in that**, depending on the driving state, the conversion matrix is recalculated by the data processing unit (12) prior to an output of the common image data set by the output means (14), wherein the driving state is a direction of movement and a speed of movement, with the recalculation having the steps:
g. acquisition of at least one specific image characteristic (18), which is included in both the first image data set and in the second image data set;
h. aligning of the at least one specific image characteristics (18);
i. determining of the conversion matrix in particular mapping rotation and translation;
j. if necessary, correction of the common image data set.

2. The method (2) according to Claim 1, **characterized in that** at least one of the at least one specific image characteristic (18) comprises a vehicle geometry such as tank lid, door handle and/or bumper, a roadway geometry such as lane stripes and/or roadway marking, and/or an environmental geometry such as a course of horizon and/or houses edges.

3. The method (2) according to Claim 2, **characterized in that** at least one of the at least one specific image characteristic (18) forms a calibration point for the display device (4).

4. The method (2) according to at least one of the preceding claims, **characterized in that** the searching and/or acquisition of at least one specific image characteristic (18) of the at least one image data set by the data processing unit (12) comprises at least two specific image characteristics (18).

5. The method (2) according to at least one of the preceding claims, **characterized in that** the searching and/or acquisition of at least one specific image characteristic (18) of the at least one image data set by the data processing unit (12) comprises at least three specific image characteristics (18).

6. The method (2) according to at least one of the preceding claims, **characterized in that** the correcting of the deviation comprises an adjustment of the at least one acquisition means (8).

7. The method (2) according to Claim 6, **characterized in that** the adjustment comprises a mechanical adjustment, in particular a rotating, a swiveling or an adjusting of the optical focal point, by at least one adjusting unit (16).

8. The method (2) according to at least one of the preceding claims, **characterized in that** the correcting comprises a, in particular algorithm-based, calculation of the image data set of the at least one acquisition means (8), in particular a rotation and/or translation, by the data processing unit (12).

9. The method (2) according to at least one of the preceding claims, **characterized in that** the conversion matrix is recalculated by the data processing unit (12) at regular time intervals of 0.1 milliseconds to 1 second.

10. A display device (4) for a motor vehicle (6), having at least one acquisition means (8), at least one data processing unit (12) comprising at least one storage means (10), and having at least one output means (14), **characterized in that** it can be operated with a method (2) according to one or more of Claims 1 to 10.

11. The display device (4) according to Claim 9, **characterized in that** the at least one acquisition means (8) having at least one first acquisition means (8) and at least one second acquisition means (8).

12. The display device according to any one of Claims 10 or 11, **characterized by** at least one adjustment unit (16), which can be or is assigned to at least one acquisition unit, and/or by at least one sensor means such as a motion sensor, speed sensor and/or distance sensor.

## Revendications

1. Procédé (2) de fonctionnement d'un dispositif d'affichage (4) pour un véhicule automobile (6), qui a au moins un moyen de détection (8), au moins une unité de traitement de données (12), comprenant en particulier au moins un moyen de mémorisation (10) et au moins un moyen de sortie (14), avec les étapes:
a. détection d'au moins un jeu de données d'image par l'au moins un moyen de détection (8);
b. détection de la position du moyen de détection (8) et/ou d'un support du moyen de détection (8) ;
c. recherche et/ou détection d'au moins une caractéristique d'image spécifique (18) du jeu de données d'image par l'unité de traitement de données (12) ainsi que de son agencement effectif dans le jeu de données d'image ;
d. détection d'une déviation dé de l'agencement effectif dans le jeu de données d'image du au moins une caractéristique d'image spécifique (18) du jeu de données d'image par rapport à un agencement théorique, enregistré dans le moyen de mémorisation (10), dans le du jeu de données d'image du au moins une caractéristique d'image spécifique (18) du jeu de données d'image par l'unité de traitement de données (12);
e. éventuellement correction de la déviation;
f. sortie, par le moyen de sortie (14), du jeu de données d'image corrigé ; **caractérisé en ce que** la détection d'au moins un jeu de données d'image par l'au moins un moyen de détection (8) comprend une détection d'un premier jeu de données d'image par un premier moyen de détection (8) et la détection d'un deuxième jeu de données d'image par un deuxième moyen de détection (8), **en ce que**, sur le moyen de sortie (14), il est sorti un jeu de données d'image commun calculé à partir du premier jeu de données d'image et du deuxième jeu de données d'image sur la base d'une matrice de conversion et **en ce que**, en fonction de l'état de déplacement, un nouveau calcul de la matrice de conversion est effectué par l'unité de traitement de données (12) avant une sortie du jeu de données d'image commun par le moyen de sortie (14),
l'état de déplacement est une direction de déplacement et une vitesse de déplacement, le nouveau calcul s'effectuant avec les étapes:
g. détection d'au moins une caractéristique d'image spécifique (18) qui est contenue aussi bien dans le premier jeu de données d'image que dans le deuxième jeu de données d'image ;
h. mise en coïncidence de l'au moins caractéristique d'image spécifique (18);
i. détermination de la matrice de conversion en particulier représentant la rotation et la translation ;
j. éventuellement, correction du jeu de données d'image commun.

2. Procédé (2) selon la revendication 1, **caractérisé en ce qu'**au moins une d'au moins une caractéristique d'image spécifique (18) comprend une géométrie du véhicule, telle que le couvercle de réservoir, la poignée de porte et/ou le parechoc, une géométrie de la chaussée telle que les voies et/ou le marquage de la chaussée, et/ou une géométrie des alentours telle que la forme de horizon et/ou des arêtes de maisons.

3. Procédé (2) selon la revendication 2, **caractérisé en ce qu'**au moins une d'au moins une caractéristique d'image spécifique (18) forme un point de calibrage pour le dispositif d'affichage (4).

4. Procédé (2) selon au moins l'une des revendications précédentes, **caractérisé en ce que** la recherche et/ou la détection d'au moins une caractéristique d'image spécifique (18) du au moins un jeu de données d'image par l'unité de traitement de données (12) comprend au moins deux caractéristiques d'image spécifiques (18).

5. Procédé (2) selon au moins l'une des revendications précédentes, **caractérisé en ce que** la recherche et/ou la détection d'au moins une caractéristique d'image spécifique (18) du au moins un jeu de données d'image par l'unité de traitement de données (12) comprend au moins trois caractéristiques d'image spécifiques (18).

6. Procédé (2) selon au moins l'une des revendications précédentes, **caractérisé en ce que** la correction de la déviation comprend un réglage du au moins un moyen de détection (8).

7. Procédé (2) selon la revendication 6, **caractérisé en ce que** le réglage comprend un réglage mécanique, en particulier une rotation, un pivotement ou un réglage du foyer optique par au moins une unité de réglage (16).

8. Procédé (2) selon au moins l'une des revendications précédentes, **caractérisé en ce que** la correction comprend un calcul, en particulier assisté par algorithme, du jeu de données d'image du au moins un moyen de détection (8), en particulier une rotation et/ou une translation, par l'unité de traitement de données (12).

9. Procédé (2) selon au moins l'une des revendications précédentes, **caractérisé en ce que** le nouveau calcul de la matrice de conversion par l'unité de traitement de données (12) s'effectue à des intervalles de temps réguliers de 0,1 milliseconde à 1 seconde.

10. Dispositif d'affichage (4) pour un véhicule automobile (6), ayant au moins un moyen de détection (8), au moins une unité de traitement de données (12), comprenant au moins un moyen de mémorisation (10), et ayant au moins un moyen de sortie (14), **caractérisé en ce qu'**il peut fonctionner avec un procédé (2) selon l'une ou plusieurs des revendications 1 à 10.

11. Dispositif d'affichage (4) selon la revendication 9, **caractérisé en ce que** l'au moins un moyen de détection (8) a au moins un premier moyen de détection (8) et au moins un deuxième moyen de détection (8).

12. Dispositif d'affichage selon l'une des revendications 10 ou 11, **caractérisé par** au moins une unité de réglage (16) qui peut être affectée ou qui est affectée à au moins une unité de détection et/ou par au moins un moyen de capteur, tel qu'un capteur de mouvement, un capteur de vitesse et/ou un capteur de distance.
